# EUROPEAN PATENT SPECIFICATION

(11) **EP 0 957 320 B1**
(45) Date of publication and mention of the grant of the patent: **09.07.2008**
(21) Application number: 99303783.7
(22) Date of filing: 14.05.1999
(51) Int. Cl.: F24F 3/147, F24F 3/14

(54) **Heat exchanger element**
Wärmeaustauscherelement
Elément d'échange de chaleur

(30) Priority: 14.05.1998 JP 13162698; 18.05.1998 JP 13505898
(43) Date of publication of application: 17.11.1999
(73) Proprietor: Seibu Giken Co., Ltd., Koga-shi, Fukuoka-ken (JP)
(72) Inventor: Okano, Hiroshi, Koga-Shi, Fukuoka-ken (JP)
(74) Representative: Johnson, Terence Leslie

(56) References cited:
- US-A- 4 172 164
- US-A- 5 580 370
- PATENT ABSTRACTS OF JAPAN vol. 1997, no. 03, 31 March 1997 (1997-03-31) -& JP 08 299745 A (SEIBU GIKEN:KK;KUMA TOSHIMI), 19 November 1996 (1996-11-19)

## Description

The invention relates to a total heat energy exchanger element to recover the sensible heat lost during ventilation at the time of air conditioning.

I It is known to apply a moisture adsorbing agent, for example silica gel, active carbon, zeolites, etc. on sheets to form a total heat energy exchanger element for latent heat exchange or to adsorb moisture (JP-A-08-299745). For example in summer, outside air having high temperature and high humidity is passed through the processing zone of a total heat energy exchanger element to lower the temperature and humidity of the air to supply the air-conditioned room. The return air from the room is passed through the return air zone of the total heat energy exchanger element to give the return air heat and moisture given to the total heat energy exchanger element from the outside air having high temperature and high humidity and is discharged to the outside.

However, when heat exchange is accomplished by the above-mentioned total heat energy exchanger element of the prior art, various odour materials, harmful gases and other materials contained in the return air or in the outside air are adsorbed on the adsorbent in the total heat energy exchanger element and accumulate gradually. These materials and gases are directed into the room and cause odours

Total heat energy exchanger elements have a heat storing means for sensible heat exchange and a moisture adsorbing means for latent heat exchange. The moisture adsorbing means cannot return the moisture into the room if the moisture adsorbing means cannot adsorb the moisture quickly and cannot desorb it easily. However the moisture adsorbents which can adsorb the moisture quickly and can desorb the moisture have a defect in that they can also easily adsorb and desorb materials other than water generally, that is, the adsorbents adsorb and desorb odorous components and the odorous components return into the room.

Therefore, various technologies which reduce the transfer of the odorous components in a total heat energy exchanger element, for example, the technology in which the zeolite which has pores of substantially the same diameter as that of water molecules have been used to provide the moisture adsorbent.

As for the prior above-mentioned total heat energy exchanger elements, the transfer of the odorous component in a total heat energy exchanger element has been decreased but the prevention of the transfer was not always sufficient, and it was not always enough in the point of not adsorbing a very small amount of chemical materials but exhausting those from the room. That is, the prior total heat energy exchanger elements used silica gel or zeolites as the moisture adsorbent. The principle of moisture adsorbing in these total heat energy exchangers depends on the adsorbent bonding with the molecule of water by the hydrogen bond on the low humidity side. Therefore, only the molecules of water are basically adsorbed if the molecules of water are adsorbed by this principle only, but also the phenomenon is noted that water enters pores formed in the adsorbent at the same time by capillary action. In this case, also the polar compounds are adsorbed, and such materials transfer into the room by the desorption from the adsorbent.

Moreover, many kinds of gaseous chemical materials exist in a room in recent years. It is difficult to prevent the transfer of these chemical materials effectively in the prior total heat energy exchanger element. That is, it is reported that many kinds of chemical materials are used for adhesives and insecticides, etc. used in furniture and wallpapers, etc. that very small amounts of various chemical materials generate from homes and offices, etc., and that such chemical materials cause hypersensitivity syndrome.
It is an object of the present invention to provide a total heat energy exchanger element which can minimise the transfer of odorous components and also which can exhaust a very small amount of gases contained in the air from the room.

According to the present invention there is provided a heat exchanger element formed by a plurality of sheets laminated to provide a plurality of channels therebetween, characterised in that in the heat exchanger, an individual sheet comprises the sheet as a base, a layer of resin adhesive coated on the sheet and, fixed to the sheet by the resin adhesive, a layer of a styrene-series ion exchange resin having ionised radicals chemically bonded in its molecules as a moisture adsorbing agent.

The invention further provides use in a heat exchange element of a moisture adsorbing agent comprising a styrene-series ion exchange resin having ionised radicals chemically bonded in its molecules to minimise the transfer of odorous components and to reduce the amount of gases exhausted.

The sheets are laminated to form a honeycomb.

It will be understood that the said styrene series ion exchange resin has an action such that it does not adsorb various chemical substances whether the gas contained in the air is acidic or basic.

The invention will further be described by way of example with reference to the following schematic drawings in which:
Fig. 1 is a perspective view of the total heat energy exchanger element according to the invention;
Fig. 2 is a graph showing the transfer of the odorous material by the total heat energy exchanger element according to the present invention; and

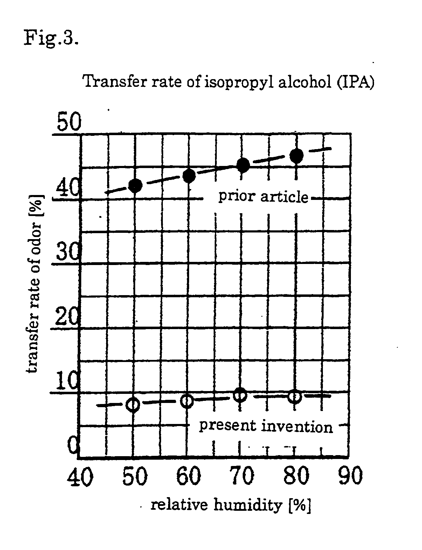

Fig. 3 is a graph showing the transfer of the odorous material by the total heat energy exchanger element according to the present invention.

Referring to the drawings there is illustrated a heat exchanger element (5) formed by a plurality of sheets (1, 2) laminated to provide a plurality of channels therebetween, characterised in that in the heat exchanger, an individual sheet (1, 2) comprises the sheet as a base, a layer of resin adhesive coated on the sheet (1, 2) and, fixed to the sheet by the resin adhesive, a layer of a styrene-series ion exchange resin having ionised radicals chemically bonded in its molecules as a moisture adsorbing agent.

To form the element (5) an adhesive is coated on an aluminium sheet coated with melamine resin. Powder of a styrene-series ion exchange resin having ionised radicals chemically bonded in its molecules is then blown upon the aluminium sheet by about 20-35% for the weight of the sheet as a moisture adsorbing agent.

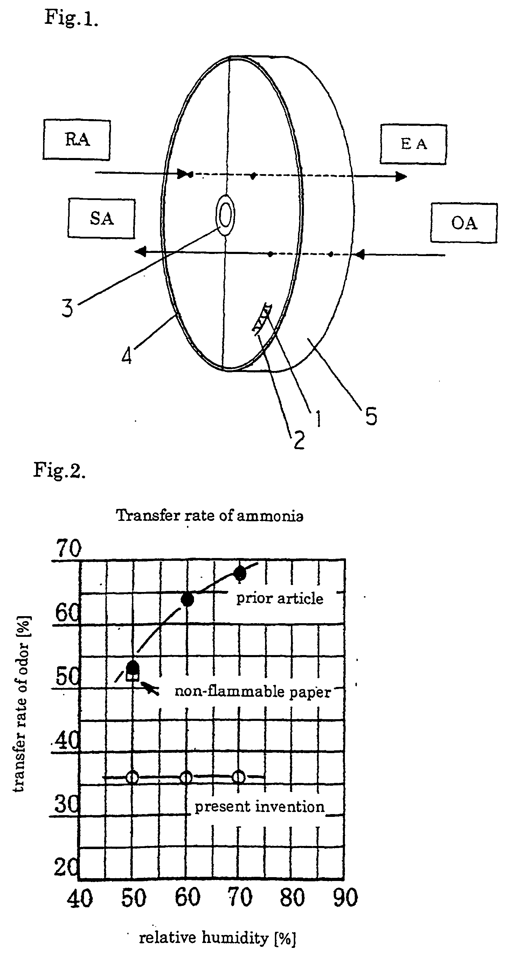

A wave-shaped corrugated sheet 1 and a plane liner sheet 2, both sheets being aluminium sheets having moisture adsorbing agent blown on both sheets, are piled up and wound on a boss 3 as shown in Fig. 1. An adhesive is coated on the top of the wave of the corrugated sheet 1 at the time of this winding. As a result, the corrugated sheet 1 and the liner sheet 2 are bonded to each other, and the resulting honeycomb body becomes strong.

An antifungal agent may be mixed in the adhesive beforehand. Though many kinds of antifungal agent are on the market, a safe one for the human body is selected. For instance, silver chloride, etc. are preferred as they have been used from old times and their safety has been confirmed. After the sheets are wound to get a prescribed thickness, they may be soaked in a solution of thiabendazole, an antifungal agent, and thereafter an outer board 4 such as galvanised steel board may be wound on the outer periphery to complete the total heat energy exchanger element 5. Thiabendazole is a safe antifungal agent which may be added to foods.

Styrene-series neutral ion exchange resin of Na-type can be used as the above-mentioned moisture adsorbing agent, and as more concrete examples, DIAION SKIB supplied by Mitsubishi Kagaku Kabusiki Kaisha and Dowex Ion HCR-S supplied by Dow Chemical Co., etc. can be used.

The styrene-series neutral ion exchange resin particles are spheroidal and of 0.4-0.6 mm in diameter directly after manufacturing. Because the particle diameter is large as it is, it is preferably crushed by a mill.

The powder of the styrene-series neutral ion exchange resin of Na-type functions as a moisture adsorbing agent in the total heat energy exchanger element 5 of the present invention having the above-mentioned constitution. The corrugated sheet 1 and the liner sheet 2 made of aluminium sheet function as a storage medium of the sensible heat.

That is, in the prior total heat energy exchanger element using silica gel or zeolites as a moisture adsorbing agent, the principle of moisture adsorption is that water molecules are adsorbed by the hydrogen bond and the capillary tube phenomenon. On the other hand, in the total heat energy exchanger element 5 of the present invention, the moisture adsorbent is the styrene-series ion exchange resin having ionised radicals chemically bonded in its molecules, and water is adsorbed by the hydration with the ion exchange radicals. Therefore, the molecules of water only are adsorbed selectively when a mixed gas of water vapour and the vapour of a substance which cannot proceed ion exchange such as the vapour of hydrocarbon make contact with the total heat energy exchanger element. Here, the chemical formula of the styrene-series ion exchange resin having ionised radicals chemically bonded in its molecules used in the present invention is shown.

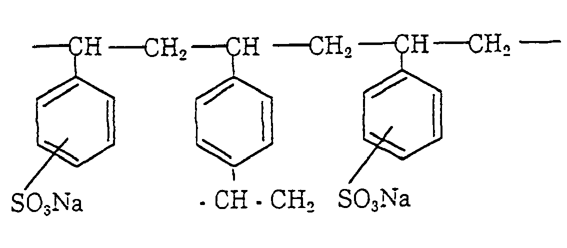

When the mixed gas of an ion-exchangeable substance and water vapour contacts the total heat energy exchanger, only the water molecules and the ion-exchangeable substance are adsorbed. The latter is adsorbed by the ion exchange and is adsorbed by the ionic bond in the condition that the substance is not easily desorbed.

That is, the ion exchange resin should be washed with a large amount in chemical equivalent of strong acid or strong alkaline solution to adsorb many kinds of substances and to desorb the adsorbed substances. Therefore, the adsorbed substances are not desorbed by contact with the air of normal temperature, the ion-exchangeable substances accumulate gradually on the adsorbent. The adsorbent adsorbs the substances until the adsorption ability saturates. Thereafter, the adsorbent comes to adsorb only the molecules of water.

As described hereinabove, the ion exchange resin as a moisture adsorbent does not adsorb substances other than water, and so the transfer of odorous materials and chemical substances becomes very little.

The transfer of ammonia of the total heat energy exchanger 5 of the present invention was tested by the following method.

Return air (RA) in Fig. 1 was mixed with 35ppm concentration of ammonia and passed in the total heat energy exchanger element 5, and the quantity of ammonia transferred to supply air (SA) was measured. The conditions of the air was that the temperature of outer air (OA) was constant at 35°C, the relative humidity of it was changed from 40% to 90%, the temperature of return air (RA) was constant at 24°C, and its relative humidity was constant at 55%.

The air speed at the front of the total heat energy exchanger element 5 was 3m/sec, and the rotation speed of the element 5 was 15 rotations per minute (RPM). As a result, the transfer ratio of ammonia was extremely little as shown in Fig 2. "Non-flammable paper" in the graph of Fig. 2 shows a paper treated to give non-flammability and impregnated with lithium chloride solution as a moisture adsorbing agent, and this paper showed the transfer ratio of 52% at the relative humidity of 50%.

The transfer of isopropyl alcohol in the total heat energy exchanger element 5 of the present invention was tested by the following method.

RA (return air) in Fig. 1 was mixed with 35ppm concentration of isopropyl alcohol and passed in the total heat energy exchanger element 5, and the transferred mass of isopropyl alcohol to SA (supply air) was measured. The conditions of the air was that the temperature of outer air (OA) was constant at 35°C, the relative humidity of it was changed from 50% to 80%, the temperature of return air (RA) was constant at 24°C, and its relative humidity was constant at 55%. The air speed at the front of the total heat energy exchanger element 5 was 3m/sec. and the rotation speed of the element 5 was 15 RPM.

As the result, the transfer ratio of isopropyl alcohol was not more than 10% in the region of the relative humidity 50%-80%, that was much less than the prior article.

As described above, the transfer ratio of ammonia in the present invention is at most approximately 36% in the region of the relative humidity 50%-80%, that is extremely little compared with the prior article using the adsorbents such as silica gel and the prior article using lithium chloride as adsorbent.

Moreover, when the total heat energy exchanger element 5 is used as a total heat energy exchanger element when the room air-conditioned in the summer is ventilated, the surface of the sheets comprising the element might get wet by dew condensation. That is RA in Fig. 1 has low temperature and low humidity, and OA has high temperature and high humidity when the room is air-conditioned. Here, the flow of the air sent to the total heat energy exchanger element 5 stops if the operation of the total heat energy exchanger element 5 is stopped. The part of the total heat energy exchanger element just moved from the RA zone to the OA zone is in a low temperature and dew might condense if the part touches OA.

Under such conditions for a long time, it may be thought that mould can grow at the part wet by the dew condensation. But the generation of the mould is prevented as antifungal agent is used. Also, as the corrugated sheet 1 and the liner sheet 2 approach mutually near the bonded part, narrow gaps are formed. The condensed water can collect in these gaps but bacteria do not multiply here because an antibacterial agent can be mixed with the adhesive.

The corrugated sheet 1 and the liner sheet 2 were made of aluminium sheets in the above-mentioned example, but polyethylene-terephthalate sheet, polyester sheet, non-flammable paper, etc. can be used instead of the above-mentioned examples.

In addition, in the example a crushed moisture adsorbing agent was blown against sheet materials to adhere, but the moisture adsorbing agent may be disposed in a liquid adhesive to dip the sheet materials in. This soaking can be preceded in the state before the sheet is corrugated or after the corrugation and honeycomb-forming.

Further, minute powder of the styrene-series neutral ion exchange resin Na type was used as a moisture adsorbing agent in the above-mentioned example, but minute powders of styrene-series ion exchange resins H-type, styrene-series ion exchange resins Li-type, styrene-series ion exchange resins K-type or styrene-series ion exchange resins Ca-type can also be used.

The above-mentioned various ion exchange resins can be properly selected according to the atmosphere used for the total heat energy exchanger element 5, namely according to the gas contained in the air. Air containing different gases can be dealt with by using a number of kinds of ion exchange resins.

The total heat energy exchanger element of the present invention is the one in which the sheets fixed with a styrene-series ion exchange resin having chemically bonded ionised radicals in its molecule as a moisture adsorbing agent are laminated to form many small channels as explained above. The moisture adsorbing agent adsorbs only the molecules of water selectively, and the transfer of odorous materials and chemical materials decreases extremely. Therefore, the air passed the total heat energy exchanger element has no odour, and chemical substances can be exhausted outdoors by operating the total heat energy exchange even if chemical substances generate in the room, and the sick house syndrome and the hypersensitivity syndrome by chemical substances can be prevented.

Furthermore, as neither mould nor bacteria can grow, the mould and the bacteria cannot float in the air which is passed in the total heat energy exchanger element, and the exchanger thus provides sanitary conditions.

## Claims

1. A heat exchanger element (5) formed by a plurality of sheets (1, 2) laminated to provide a plurality of channels therebetween, **characterised in that** in the heat exchanger, an individual sheet (1, 2) comprises the sheet as a base, a layer of resin adhesive coated on the sheet (1, 2) and, fixed to the sheet by the resin adhesive, a layer of a styrene-series ion exchange resin having ionised radicals chemically bonded in its molecules as a moisture adsorbing agent.

2. An element as claimed in claim 1, **characterised in that** the sheets (1, 2) are laminated to form a honeycomb.

3. An element as claimed in claim 1 or claim 2, **characterised in that** an antifungal agent is fixed on the sheets (1,2).

4. An element according to any preceding claim, **characterised in that** the sheets (1, 2) are laminated using an adhesive, and **in that** an antifungal agent is mixed in said adhesive.

5. An element according to any preceding claim, **characterised in that** the sheets (1, 2) comprise aluminium.

6. An element according to any preceding claim, **characterised in that** the laminate comprises alternate corrugated and planar sheets (1, 2).

7. An element according to any preceding claim, **characterised by** comprising an antibacterial agent.

8. An element according to any preceding claim, **characterised in that** the resin is powdered.

9. An element according to any preceding claim, **characterised in that** the ion exchange resin is blown against the sheet(s) to provide an ion exchange resin layer.

## Patentansprüche

1. Wärmeaustauscherelement (5), das aus mehreren Platten (1, 2) gebildet ist, die zum Bereitstellen mehrerer Kanäle dazwischen aufeinander laminiert sind, **dadurch gekennzeichnet, dass** im Wärmeaustauscher eine einzelne Platte (1, 2) die Platte als Grundplatte, eine Schicht Harzklebstoff, die auf die Platte (1, 2) aufgebracht ist und auf die Platte durch den Harzklebstoff befestigt eine Schicht eines Ionenaustauschharzes der Styrolserie umfasst, das ionisierte Radikale aufweist, die chemisch als Feuchtigkeitsabsorptionsmittel in seine Moleküle gebunden sind.

2. Element nach Anspruch 1, **dadurch gekennzeichnet, dass** die Platten (1, 2) unter Bildung einer Wabe laminiert sind.

3. Element nach Anspruch 1 oder Anspruch 2, **dadurch gekennzeichnet, dass** ein antifungales Mittel auf den Platten (1, 2) befestigt ist.

4. Element nach einem der vorhergehenden Ansprüche, **dadurch gekennzeichnet, dass** die Platten (1, 2) mit Hilfe eines Klebstoffs laminiert sind und dass ein antifungales Mittel in den Klebstoff eingemischt ist.

5. Element nach einem der vorhergehenden Ansprüche, **dadurch gekennzeichnet, dass** die Platten (1, 2) Aluminium umfassen.

6. Element nach einem der vorhergehenden Ansprüche, **dadurch gekennzeichnet, dass** das Laminat abwechselnde Well- und Flachplatten (1, 2) umfasst.

7. Element nach einem der vorhergehenden Ansprüche, **gekennzeichnet durch** das Umfassen eines antibakteriellen Mittels.

8. Element nach einem der vorhergehenden Ansprüche, **dadurch gekennzeichnet, dass** das Harz pulverförmig ist.

9. Element nach einem der vorhergehenden Ansprüche, **dadurch gekennzeichnet, dass** das Ionenaustauschharz gegen die Platte(n) (1, 2) geblasen wird, um eine Ionenaustauschharzschicht bereitzustellen.

## Revendications

1. Élément échangeur de chaleur (5) formé d'une pluralité de feuillets (1, 2) laminés de façon à créer une pluralité de canaux entre ceux-ci, **caractérisé en ce que** dans l'échangeur de chaleur, un feuillet individuel (1, 2) comprend le feuillet comme base, une couche d'un adhésif à base de résine enduite sur le feuillet (1, 2) et, fixée au feuillet par l'adhésif à base de résine, une couche d'une résine échangeuse d'ions de la série des styrènes qui présente dans ses molécules des radicaux ionisés chimiquement liés servant d'agent adsorbant l'humidité.

2. Élément selon la revendication 1, **caractérisé en ce que** les feuillets (1, 2) sont laminés de façon à former un nid d'abeilles.

3. Élément selon la revendication 1 ou la revendication 2, **caractérisé en ce qu'**un agent antifongique est fixé sur les feuillets (1, 2).

4. Élément selon l'une quelconque des revendications précédentes, **caractérisé en ce que** les feuillets (1, 2) sont laminés en utilisant un adhésif et **en ce que** l'agent antifongique est mélangé au dit adhésif.

5. Élément selon l'une quelconque des revendications précédentes, **caractérisé en ce que** les feuillets (1, 2) comprennent de l'aluminium.

6. Élément selon l'une quelconque des revendications précédentes, **caractérisé en ce que** le stratifié comprend des feuillets ondulés alternant avec des feuillets plans (1, 2).

7. Élément selon l'une quelconque des revendications précédentes, **caractérisé en ce qu'**il comprend un agent antibactérien.

8. Élément selon l'une quelconque des revendications précédentes, **caractérisé en ce que** la résine est sous la forme d'une poudre.

9. Élément selon l'une quelconque des revendications précédentes, **caractérisé en ce que** la résine échangeuse d'ions est soufflée sur le(s) feuillet(s) pour produire une couche de résine échangeuse d'ions.
